Europäisches Patentamt

European Patent Office

Office européen des brevets

(19)

(11) Veröffentlichungsnummer: **0 392 479**
**A1**

(12) **EUROPÄISCHE PATENTANMELDUNG**

(21) Anmeldenummer: **90106892.4**

(22) Anmeldetag: **10.04.90**

(51) Int. Cl.5: **G02C 7/02, G02C 7/08,**
**G02B 3/14**

(30) Priorität: **13.04.89 IL 89945**

(43) Veröffentlichungstag der Anmeldung:
**17.10.90 Patentblatt 90/42**

(84) Benannte Vertragsstaaten:
**AT BE CH DE ES FR GB IT LI NL**

(71) Anmelder: **Barnea, Daniel I., Dr.**
**1 Ugarit Street**
**IL-69016 Tel Aviv(IL)**

(72) Erfinder: **Barnea, Daniel I., Dr.**
**1 Ugarit Street**
**IL-69016 Tel Aviv(IL)**

(74) Vertreter: **Beckensträter, Friedrich Wilhelm,
Dr.**
**Falkensteiner Strasse 23**
**D-6000 Frankfurt am Main 1(DE)**

(54) **Optische Linse oder optisches Linsensystem mit variabler Servo-Fokussierung sowie Verlaufsabstufung.**

(57) Optische Linse oder optisches Linsensystem, in welchem eine Konstruktion enthalten ist, die statisch durch Verlaufsabstufung oder andere Mittel eine nicht-uniforme Brechkraftfunktion in Abhängigkeit von ihrer Befindlichkeit auf einem Linsenoberflächenpunkt liefert. Die erfindungsgemäße optische Linse enthält ferner ein wahlweise betätigbares Element, das eine dynamische Änderung in der Brechkraft der Linse bewirken kann, welche eine uniforme oder nicht-uniforme Funktion des Positionspunkts auf der Linse ist. Die tatsächliche Brechkraft an jedem Punkt der erfindungsgemäßen optischen Linse oder des optischen Linsensystems ist durch die Überlagerung der mittels wahlweise betätigbaren Elements gesteuerten Brechkraft auf die durch Verlaufsabstufung statisch gegebene Brechkraft gegeben. Die richtige Berechnung jeder Brechkraftfunktion macht die optische Linse leichter; sie ist geeignet und optimal für spezielle als auch für gewöhnliche Benutzung.

Fig. 4

EP 0 392 479 A1

# Optische Linse oder optisches Linsensystem mit variabler Servo-Fokussierung sowie Verlaufsabstufung

Die vorliegende Erfindung betrifft optische Linsen mit Verlaufsabstufung als einer Eigenschaft der Position auf den Linsen, welche auch Mittel für die Veränderbarkeit der Brechkraft oder Brennweite aufweisen, die die Verlaufswerte überlagern.

In der Optik sind optische Linsen variabler Brennweite von großer Bedeutung, insbesondere auf dem Gebiet der Brillengläser. Das menschliche Auge verliert nach Erreichen der mittvierziger Lebensjahre einer Person seine natürliche Flexibilität zur Einstellung auf Objekte in unterschiedlicher Entfernung. Ein Lösungsweg zur Überwindung dieses Problems war kürzlich durch den Vorschlag von Brillen mit Gläsern von variabler Brechkraft offenbart worden, wobei die Brechkraft durch Betätigung einer Steuerung oder sogar durch eine automatische Mechanik, in der opto-elektronische oder andere Entfernungsmesser eingesetzt werden, verändert werden kann (z.B. gemäß U.S.-Patenten Nrn. 4.261.655 und 4.418.990 sowie die EP-Anmeldung Nr. 88111007.6 von Daniel J. Barnea u.s.w.). Ein potentielles Handikap einer solchen Brille kann bereits der Zeitumstand sein, d.h. die Zeit, die erforderlich ist für den Wechsel zwischen den Entfernungen, die während des Tragens der Brille auftreten. Obgleich bei Betätigung einer Mechanik Umschaltzeiten von unter einer Sekunde möglich sind, können zu häufige Brennweitenwechsel zur Ermüdung des Brillenträgers führen oder zu exzessivem Energieverbrauch im Falle einer automatischen Mechanik.

Nach einem anderen geläufigeren Vorschlag zur Behebung des Verlusts der Flexibilität zum Scharfsehen werden Brillengläser mit Verlaufsabstufung der Linse hergestellt, d.h. das Brillenglas selbst wird in Bereiche unterschiedlicher Brechkraft eingeteilt. Diese Brillen erlauben den Vorteil des sofortigen Umschaltens von einem Brennweitenbereich zum anderen. Jedoch sind diese Brillengläser mit Verlaufsabstufung nachteilig insofern, als die Brennweiten starr von dem Blickwinkel (Auge-Brillenglasbereich-Objekt) abhängen, der nicht notwendigerweise den Umgebungsanforderungen entspricht. Denn die vernünftigste Abstufung der Brennweite beginnt bei den höchsten Brechkraftwerten bei kleinem Winkel (wie beim Lesen) und wird allmählich geringer bei größeren Winkeln (für weitere Entfernungen). Auf diese Weise wird die Linsenbrechkraft gestuft vom niedrigsten bis zu höchsten Winkeln, um um bis zu 3 Dioptrien abzunehmen. Der Nachteil dieser Winkelabhängigen Brechkraft-Stufeneinteilung läßt sich am besten mit dem Beispiel illustrieren, daß nahe Objekte, die sich in einem hohen Blickwinkel befinden, das äußerst unnatürliche Anheben bzw. Rückwärtskippen des Kopfes diktieren.

Aufgabe der vorliegenden Erfindung ist es daher, unter weitestgehender Beseitigung ihrer jeweiligen Nachteile die Vorteile der beiden genannten Typen optischer Linsen in geeigneter Weise zu verbinden und miteinander zu optimieren.

Erfindungsgemäß wird dies erreicht durch eine optische Linse mit den Merkmalen des Patentanspruchs 1. Vorteil hafte Weiterbildungen und Ausgestaltungen des Erfindungsgedankens ergeben sich aus den auf Patentanspruch 1 folgenden Patentansprüchen.

Nach einer üblichen Verlaufsabstufungs-Konstruktion der optischen Linse wird für den Brillenträger eine Brechkraftveränderbarkeit für seine Sehschärfe vorgesehen, die von etwa 30 bis 40 cm bei geringen oder niedrigen Blickwinkeln bis ungefähr unendlich bei größten bzw. am höchsten aufwärts gerichteten Blickwinkeln veränderbar ist. Das Ausmaß einer solchen Brechkraftänderung beträgt ungefähr 2,5 bis 3 Dioptrien vom niedrigsten bis zum höchsten Blickwinkel. Diese Änderung der Brechkraft als Eigenschaft von Blickwinkeln, wie sie durch jede Verlaufsabstufung (in Brennweitenbereichen) bestimmt ist, ist tatsächlich sehr einschränkend, weil die (Blickziel-) Gegenstände in der Umgebung des Brillenträgers kaum jemals in ein entsprechendes Muster passen.

In den meisten Szenarien befindet sich das dem Betrachter nähere Objekt in einer Sichtlinie, die unterhalb der eines weiter entfernten Objekts liegt - aber keineswegs immer. Darüber hinaus wird, selbst wenn die Verteilung der Objektentfernungen monoton mit dem Winkel ist, in einer reellen Umgebung diese Verteilungsfunktion eine Winkelabhängigkeit entfalten, die von den Brechkraftkorrekturen, welche irgendeine optische Linse zu liefern vermag, verschieden ist. Es kann also bestenfalls eine leidlich statistische Angleichung der Veränderungsbereiche der Linsenbrechkraft an die Entfernungsverteilung eines typischen Objektschauplatzes erhofft werden.

Bei einem solchen Konstruktionsentwurf ist daher offensichtlich, daß schnelle Refokussierung von nahen auf entferntere Objekte häufig das unbequeme Rückwärtskippen des Kopfes erfordert. Denn die Kopfhaltung ist wichtig, damit die Augen einen Blickwinkel einnehmen können, für welchen die Gläser die richtige Brechkraft bzw. Brennweite aufweisen.

Bei optischen Linsen bzw. Brillengläsern mit variabler Servo-Fokussierung ist die Brechkraft an jedem Punkt der Linse steuerbar. Folglich kann jedes Objekt in Sicht fokussiert werden, ohne daß man als Brillenträger den Kopf bewegen oder gar kippen müßte. Jedoch kann die Servo-Fokussierung zu Zeiten, wenn die Umstände ein häufiges Umschalten des Brennpunkts erfordern, unbequem werden aufgrund der zu oft wiederholten Steuerungsbetätigung.

Im folgenden wird nun die Konstruktion der neuen optischen Linse oder des neuen optischen Linsensystems dargestellt, durch welche die Vorteile einer Linse mit variabler Servo-Fokussierung in Kombination mit den Vorteilen einer multifokalen Linse mit Verlaufsabstufung der Brechkraft, wie jeweils oben erwähnt, vorgesehen sind. Die Methode, die jeweils die elementaren Ansätze beider umfaßt, als Spezialaufgabe,wird dabei stets zu Entwürfen führen, die jedem der beiden Elementaransätze alleine überlegen sind. Das Prinzip der Lösung ist dabei unabhängig von der Technik, mit welcher die Verlaufsabstufung (des Brennweitenbereichs) bzw. die variable Servo-Fokussierung erreicht wird. Die Überlagerung einer optischen Linse der Verlaufsabstufung (von Brennweitenbereichen) mit einer optischen Linse variabler Servo-Fokussierung sollte ebenso machbar sein, wie es eine solche Superposition ist gegenüber einer normalen und einheitlichen Linse (normalen Linse einheitlicher Brennweite bzw. Brechkraft).

Eine bevorzugte Ausführungsform der Erfindung, mit dem das Kombinationsprinzip veranschaulicht und seine möglichen und immanenten Vorteile klar aufgezeigt werden, und weitere Ausführungsbeispiele der Erfindung werden im folgenden anhand der Zeichnung beschrieben, in welcher zeigen:

Fig. 1 Die erforderlichen Steigerungsbereiche der Linsenbrechkraft (oder verlaufsabgestufte Brechkraftkorrektur) als Funktion eines Sicht- oder Blickwinkels für regelmäßige Schreibtischarbeit,

Fig. 2 die erforderlichen Steigerungsbereiche der Linsenbrechkraft als Funktion eines Blickwinkels des aufrecht stehenden Brillenträgers während er zu Boden oder auf Wände blickt,

Fig. 3 die optimale Progressivität (der Linsenbrechkraft) für die Computer-Bildschirm-Schreibtisch-Arbeitsstation und

Fig. 4 die erfindungsgemäße Optimierung der Verlaufsabstufung als Kombination mit der variablen Servo-Fokussierung in einer bevorzugtem Ausführungsform.

Insbesondere von Brillengläsern mit Verlaufsabstufung der Brechkraft erwartet man normalerweise, daß sie den gesamten Variationsbereich von Brennweitenabstand an jedem beliebigen Ort kompensieren (d.h. für jede Objektentfernung hat wenigstens eine Stelle oder ein Winkel der Linse gegeben zu sein, an welcher/m die Brechkraftkorrektur bzw. die Sehschärfenkorrektur richtig ist).

Die Stufenänderungen über den (Blick-)Winkelbereich der Linse wird daher 2,5 Dioptrien überschreiten. Die festgestellte Änderung der Brechkraftspezifizierung beträgt ungefähr 2,5 Dioptrien, weil typische Objektentfernungen von weniger als 40 cm bei den "niedrigen" (spitzen) Winkeln bis ungefähr unendlich bei den größten, d.h. am meisten aufwärts gerichteten Winkeln reichen. Eine solche Brechkraftveränderung bzw. Brennweitenänderung tritt über einen Winkelbereich von um 50° allmählich auf.

Wie zuvor erläutert, bringen Brillen mit verlaufsabgestuften Gläsern ernstliche Einschränkungen mit sich, weil in den meisten typischen Szenarien der Winkelbetrag der Abstufung (fortlaufender Wechsel der abgestuften Brechkraft als Winkelfunktion) nicht auf die Erfordernisse der Wirklichkeit paßt. Zu Beginn wird diese Darstellung anhand sehr gewöhnlicher Beispiele untermauert, die für die normale Umgebung bezeichnend sind.

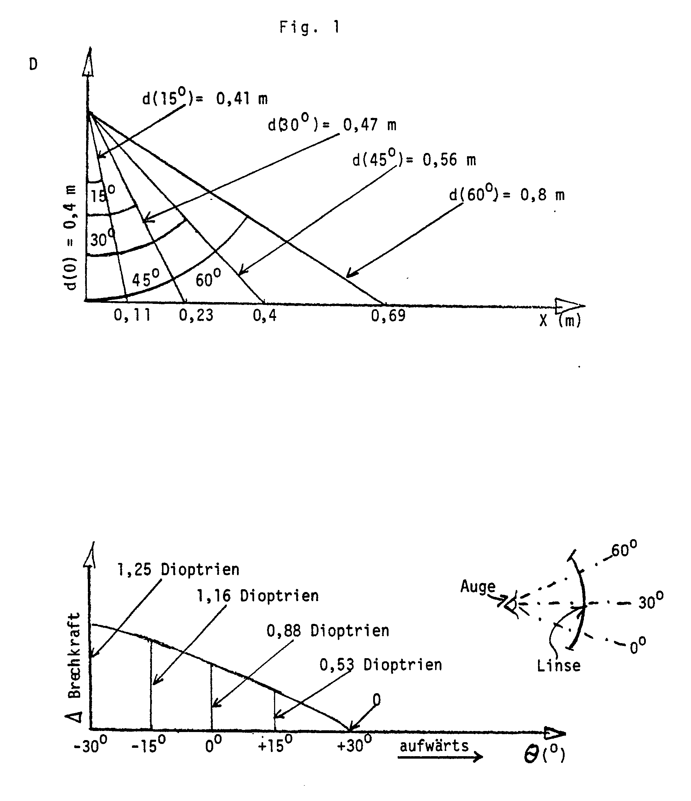

Die Figuren 1, 2 und 3 erläutern derartige Situationen. Dabei stellt sich in jeder die Frage: Wenn der Kopf nicht gekippt wird und sich nur die Blickrichtung des Augapfels (die Blicklinie) ändert, was ist dann die erforderliche Brechkraftkorrektur im nicht-adaptierten Auge als Winkelfunktion? Im Rechenbeispiel wird der Einfachheit halber angenommen, ohne die Verallgemeinerbarkeit aufzugeben, daß die notwendige Korrektur bei der Maximalentfernung Null beträgt. Auf diese Weise werden nur Brechkraftsteigerungswerte DP berücksichtigt und die Korrekturen reichen von Null bis zu irgendeinem positiven Wert (der bezogen ist auf die kürzeste Entfernung in der Szene). Es wird ferner angenommen, daß die (Blick-) Winkeländerungen des Augapfels relativ zum Kopf, normalerweise gut unter 50° betragen werden.

Im Folgenden werden zum besseren Verständnis der Berechnungen gemäß den Figuren (1 bis 4) die verwendeten Größen erläutert:

Wenn mit Ds die kürzeste Auge-Objekt-Entfernung, die gewöhnlich angenommen wird und den kleinsten Blickwinkel entstehen läßt, in der Szene angenommen wird, dann wird mit Dl analog die längste Objekt-Entfernung angenommen. Dann betragen die maximalen Brechkraftveränderungen für extreme Entfernungen:

$$DPmax = 1/Ds - 1/Dl$$

und für jede Entfernung Dr innerhalb des Bereichs beträgt die Brechkraftveränderung DP, relativ zu 1/Dl

$$DP = 1/Dr - 1/Dl.$$

Die Brechkraft P der optischen Linse kann sodann durch

$$P = A + DP$$

dargestellt werden, wobei A irgendein vorangenommener Wert ist, der für die Fokussierung des Auges erforderlich ist. Während der Analyse kann der Einfachheit halber angenommen werden, daß A = 0 ist.

Fig. 1 ist eine Rohskizze des sehr gewöhnlichen Falles der Arbeit am Schreibtisch beim Lesen von schriftlichen Unterlagen. Dabei ergibt sich die kürzeste Entfernung beim nach unten gerichteten Blick (~40 cm) und die längste Entfernung, wenn die Blicklinie sich um 50° aufwärts richtet (~62 cm). Die hieraus resultierende DPmax ist 0,9 Dioptrien.

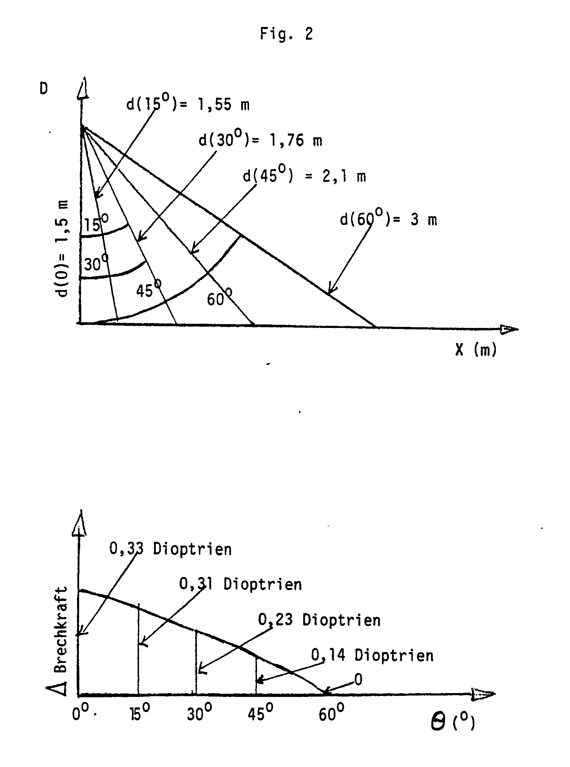

Fig. 2 erläutert zwei identische Fälle, in welchen ein aufrecht stehender Mensch zu Boden blickt oder auf eine Wand mit einer Auge-Objekt-Entfernung von 1,5 m. In beiden Fällen wird DPmax bei einem Blickwinkel von 50° (aufwärts) berechnet, so daß DPmax 0,24 Dioptrien beträgt.

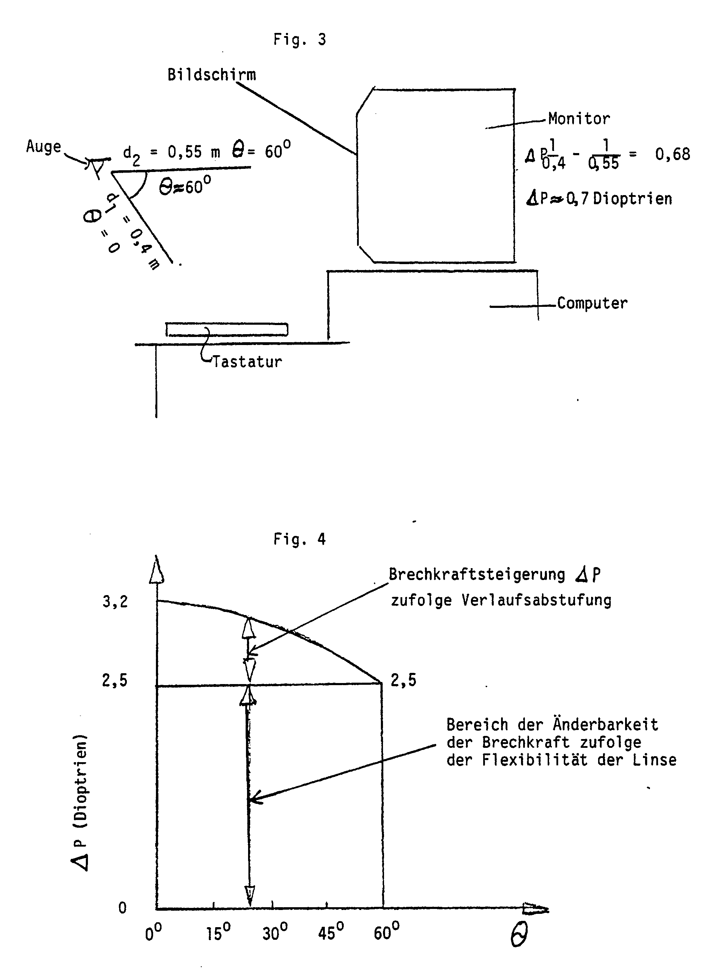

Fig. 3 illustriert einen anderen wichtigen, weil häufigen Fall, in dem eine Person einen Computer bedient und häufig bzw. ständig die Augen von der Tastatur (oder dem Notizbuch) auf den Bildschirm richtet und umgekehrt. Die Tastatur befindet sich dabei in einer Entfernung von 40 cm in der Blickrichtung abwärts, während der Bildschirm etwa 55 cm nach einer Blickrichtungswinkeländerung von 59° der Augen (zusätzlich zum Heben des Kopfes) entfernt befindet. Der Wert DPmax an einer solchen Örtlichkeit beträgt weniger als 0,7 Dioptrien.

In allen diesen Beispielen, die sehr typische Arbeitsplatzbedingungen charakterisieren, ist ersichtlich, daß die maximale Brechkraftveränderung über den Bereich der optischen Linse (oder über den von dem Blickwinkel erfaßten Bereich der Linse), also DPmax, weniger als 1,0 Dioptrien beträgt.

Deshalb wird nach der bevorzugten Ausführungsform der Erfindung eine elementare Verlaufsabstufung mit einem DPmax-Wert vorgeschlagen, der niedriger ist als 0,9 und höher als 0,2 Dioptrien oder eben niedriger als ein Kompromißwert liegt, der 0,7 Dioptrien beträgt. So werden zum Beispiel für die an einem Computer-Schreibtisch arbeitende Person Gläser vorgeschlagen, die die folgenden Kombinationsparameter aufweisen:
- DPmax = 0,7 Dioptrien, wobei die Scheitelwinkelverteilung wie in Fig. 4 erfolgt,
- Eine Superpositionsbrechkraftveränderungsfähigkeit von +/- 1,25 Dioptrien,
- Brechkraftveränderungszeit, für den gesamten Bereich, von weniger als 1 Sekunde.

Brillengläser mit den vorstehenden Kombinationsparametern ermöglichen kontinuierliches Arbeiten mit verhältnismäßig seltenen Betätigungen (Ingangsetzungen) der Brechkraftumschaltung. Der Brillenträger wird für alle Arbeitsbedingungen nur eine Brille benötigen. Hier ist zu bemerken, daß die technologische Durchführbarkeit des Einsatzes jeder optischen Linse mit jeder Art der fokalen Abstufung, die mit der steuerbaren Brechkraftveränderbarkeit gesteigert werden kann, bereits anderweitig beschrieben worden ist. Als eine Durchführungsmöglichkeit bietet sich das Paar aus durchsichtigen Membranen an, von denen eine flexibel ist, wobei der Zwischenraum mit einem Brechungsfluid gefüllt ist, dessen Druck steuerbar ist, so daß durch die Änderung der Oberflächenkrümmung die hieraus resultierende Brechkraft der Linse sich ebenfalls ändert.

## Ansprüche

1. Optische Linse oder optisches Linsensystem, **dadurch gekennzeichnet,** daß einerseits statische Mittel vorgesehen sind, die der Linse eine Brechkraft als nicht-uniforme Funktion auf dem Bereich der Oberfläche geben und daß andererseits dynamische Mittel zur wählbaren Änderung der Brechkraftfunktion auf der Linse zusätzlich zu der Brechkraftfunktion aus den statischen Mitteln derart vorgesehen sind, daß die tatsächliche Brechkraft an einem gegebenen Punkt auf der Linse die Überlagerung der Brechkraft aus den statischen Mitteln mit einer steuerbar gewählten Brechkraft aus den dynamischen Mitteln ist.

2. Optische Linse oder optisches Linsensystem nach Anspruch 1, dadurch gekennzeichnet, daß die mit jedem dynamisch gewählten Zustand verbundene Brechkraftaddition eine uniforme Funktion auf dem Linsenoberflächenbereich ist.

3. Optische Linse oder optisches Linsensystem nach Anspruch 1, dadurch gekennzeichnet, daß die mit irgendeinem dynamisch gewählten Zustand verbundene Brechkraftaddition nicht-uniform auf dem Linsenoberflächenbereich sein und sogar Null betragen sowie für einige Bereiche auf der Linse festgelegt sein kann.

4. Optische Linse oder optisches Linsensystem nach Anspruch 1, dadurch gekennzeichnet, daß die statische Brechkraftfunktion eine Kombination aus Brechkraftstufenveränderungen zwischen Bereichen auf der Linsenoberfläche und/oder allmählicher Brechkraftänderungen auf Bereichen des Oberflächengebietes ist, wie sie z.B. durch Verlaufsabstufungen erzielt wird.

5. Optische Linse oder optisches Linsensystem nach Anspruch 1, dadurch gekennzeichnet, daß die Maximum-Differenzen der aus den statischen Mitteln gegebenen Brechkraft zwischen jedem Paar Punkten auf der Linsenoberfläche durch Berechnung gegeben und begrenzt sind.

6. Optische Linse oder optisches Linsensystem nach Anspruch 1, dadurch gekennzeichnet, daß die Brechkraftveränderung aufgrund der dynamischen Mittel durch Berechnung bestimmbar ist, wobei die Veränderung und ihr Maximalwert uniform sein können oder änderbar als eine Funktion des Punktes auf der Linse.

7. Optische Linse cder optisches Linsensystem nach Anspruch 1, dadurch gekennzeichnet, daß sie/es derart berechnet ist, daß für einen besonders gewählten dynamischen Brechkraftzustand die Funktion der statischen Brechkraft der Linse für eine spezielle Verwendung geeignet ist, bei der der Benutzer keine dynamischen Brechkraftveränderungen vornehmen muß, gleichwohl aber bei Wechsel der Bedingungen diese durch Betätigung der dynamischen Brechkraftwählbarkeit erreichen kann.

8. Optische Linse oder optisches Linsensystem nach Anspruch 7, dadurch gekennzeichnet, daß die statische Brechkraftfunktion für die Benutzung zum Sehen am Schreibtisch oder dergleichen Arbeitsplatz geeignet ist, wobei die statische Brechkraftreduzierung von einem kleinen zu einem großen Blickwinkel ungefähr 1,0 Dioptrien beträgt und die dynamische Wahl von Brechkraftzunahme betätigbar ist, wenn der Benutzer in von seiner Schreibtisch- oder dergleichen Arbeitsfläche entferntere Regionen sehen will.

9. Optische Linse oder optisches Linsensystem nach Anspruch 7, dadurch gekennzeichnet, daß die statische Brechkraftfunktion berechnet ist als eine Funktion des Blickwinkels und geeignet ist für das Sehen an einem Computerbildschirm-Tastatur-Arbeitsplatz, wobei durch die Wahl von dynamischen Brechkraftveränderungen - außerhalb der Benutzung der Linse am Arbeitsplatz - das Sehen auf unterschiedliche Entfernungen kontrolliert ist.

10. Optische Linse oder optisches Linsensystem nach Anspruch 7, dadurch gekennzeichnet, daß die statisch gegebene Brechkraftfunktion für die Benutzung beim Fahren, insbesondere Autofahren, geeignet ist, wobei beide, nämlich Fernsicht für große Blickwinkel und Nahsehen - z.B. auf das Armaturenbrett - bei kleineren Blickwinkeln, gleichzeitig nebeneinander auftreten und gleichwohl durch die dynamischen Mittel Brechkraftvergrößerungen wählbar gegeben sind, so daß Nahsicht auf kürzeste Entfernung (wie Lesen bei kleineren Blickwinkeln) möglich ist, während die Sicht auf mittlere Entfernungen bei etwas höheren Blickwinkeln möglich ist.

11. Optische Linse oder optisches Linsensystem nach Anspruch 1, dadurch gekennzeichnet, daß die dynamischen Mittel für Brechkraftveränderungen über eine Linse aus zwei transparenten Membranen erreichbar sind, von denen wenigstens eine flexibel ist, deren Zwischenraum ein Brechungsfluid enthält, so daß über Mittel, die den Brechungsfluiddruck steuern, die Brechkraftveränderungen steuerbar sind.

12. Optische Linse oder optisches Linsensystem nach Anspruch 11, dadurch gekennzeichnet, daß die statischen Brechkraftfunktionen oder andere optische Korrekturen durch die Berechnung der nicht-flexiblen Membrane (des Membranenpaars) erzielbar sind.

13. Optische Linse oder optisches Linsensystem nach einem der Ansprüche 1 bis 12, dadurch gekennzeichnet, daß die statischen Mittel der Verlaufsabstufung (der Brechkraft) so berechnet und so ausgelegt sind, daß ihre größte Brechkraft weniger als ungefähr 1,0 Dioptrien beträgt.

14. Optische Linse oder optisches Linsensystem nach Anspruch 13, dadurch gekennzeichnet, daß die statischen Mittel der Verlaufsabstufung derart berechnet und ausgelegt sind, daß ihre größte Brechkraft ungefähr 0,9 Dioptrien beträgt.

15. Optische Linse oder optisches Linsensystem nach Anspruch 14, dadurch gekennzeichnet, daß die größte Brechkraft größer ist als ungefähr 0,2 Dioptrien.

16. Optische Linse oder optisches Linsensystem nach einem der Ansprüche 1 bis 15, dadurch gekennzeichnet, daß die statischen Verlaufsabstufungsmittel derart berechnet und ausgelegt sind, daß ihre maximale Brechkraft in dem Bereich zwischen ungefähr 0,2 bis 0,9 Dioptrien liegt.

17. Optische Linse oder optisches Linsensystem nach Anspruch 15, dadurch gekennzeichnet, daß die größte Brechkraft ungefähr 0,7 Dioptrien beträgt.

18. Optische Linse oder optisches Linsensystem nach einem der Ansprüche 1 bis 12, dadurch gekennzeichnet, daß die dynamischen Mittel (für die Veränderbarkeit der Brechkraft) derart berechnet und ausgelegt sind, daß eine Änderung der Brechkraft von ungefähr 2 Dioptrien bewirkbar ist.

19. Optische Linse oder optisches Linsensystem nach einem der Ansprüche 1 bis 12, dadurch gekennzeichnet, daß der Maximumbereich bei ungefähr plus/minus 1,25 Dioptrien liegt.

20. Optische Linse oder optisches Linsensystem nach einem der Ansprüche 1 bis 12, dadurch gekennzeichnet, daß die statischen Mittel zur Änderung der Brechkraft durch eine Verlaufsabstufung der Brechkraft gebildet sind.

21. Optische Linse oder optisches Linsensystem nach einem der Ansprüche 1 bis 12, dadurch gekennzeichnet, daß die statischen Mittel gebildet sind durch eine Mehrzahl von getrennten Abschnitten.

22. Optische Linse oder optisches Linsensystem nach einem der Ansprüche 1 bis 12, dadurch gekennzeichnet, daß die statischen Mittel zur Änderung der Brechkraft derart berechnet und ausgelegt sind, daß die Brechkraftverteilung der Linse aufgrund der statischen Mittel entlang einer Achse quer zur Bezugsachse nicht-uniform ist.

23. Optische Linse oder optisches Linsensystem nach einem der Ansprüche 1 bis 12, dadurch gekennzeichnet, daß die dynamischen Mittel derart berechnet und ausgelegt sind, daß die Änderung in der optischen Brechkraft entlang der Bezugsachse uniform ist.

24. Optische Linse oder optisches Linsensystem nach einem der Ansprüche 1 bis 12, dadurch gekennzeichnet, daß die dynamischen Mittel so berechnet und ausgelegt sind, daß die Änderung in der Brechkraft entlang der Bezugsachse nicht-uniform ist.

25. Optische Linse oder optisches Linsensystem nach einem der Ansprüche 1 bis 12, dadurch gekennzeichnet, daß die Linse oder das Linsensystem ein Paar an ihren Umfangsrändern verbundene Membranen umfaßt, mit einem Brechungsfluid in dem Zwischenraum aus den beiden Membranen, und Mittel zur Steuerung der Menge des zwischen den Membranen enthaltenen Brechungsfluids.

26. Optische Linse oder optisches Linsensystem nach Anspruch 25, dadurch gekennzeichnet, daß die beiden Membranen von gleicher Dicke sind.

27. Optische Linse oder optisches Linsensystem nach Anspruch 25, dadurch gekennzeichnet, daß die Membranen so berechnet und ausgelegt sind, daß die Änderung in der Brechkraft entlang der Bezugsachse nicht-uniform ist.

Fig. 1

D

d(15°)= 0,41 m

d(30°) = 0,47 m

d(45°)= 0,56 m

d(60°) = 0,8 m

d(0) = 0,4 m

15°

30°

45°    60°

0,11    0,23    0,4    0,69    X (m)

1,25 Dioptrien

1,16 Dioptrien

0,88 Dioptrien

0,53 Dioptrien

0

Δ Brechkraft

-30°   -15°   0°   +15°   +30°   aufwärts   Θ(°)

60°

Auge

30°

0°

Linse

Fig. 2

Fig. 3

Bildschirm

Monitor

Auge

$d_2 = 0,55$ m  $\theta = 60°$

$\theta \approx 60°$

$\theta = 0$  $d_1 = 0,4$ m

$\Delta P \frac{1}{0,4} - \frac{1}{0,55} = 0,68$

$\Delta P \approx 0,7$ Dioptrien

Computer

Tastatur

Fig. 4

Brechkraftsteigerung $\Delta P$
zufolge Verlaufsabstufung

3,2

2,5

2,5

Bereich der Änderbarkeit
der Brechkraft zufolge
der Flexibilität der Linse

$\Delta P$ (Dioptrien)

0

$0°$  $15°$  $30°$  $45°$  $60°$  $\theta$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 403 840 (M.R. OKUN) <br> * Spalte 1, Zeile 1 - Spalte 2, Zeile 38; Spalte 4, Zeile 31-37; Figur 3 * <br> --- | 1,4,8, 13,20, 21 | G 02 C 7/02 <br> G 02 C 7/08 <br> G 02 B 3/14 |
| Y | DE-B-2 814 916 (OPTISCHE WERKE G. RODENSTOCK) <br> * Spalte 2, Zeilen 20-28; Spalte 2, Zeile 39 - Spalte 3, Zeile 18; Figuren 1,5,7 * <br> --- | 1,4,8, 13,20, 21 | |
| A,D | EP-A-0 299 393 (D.I. BARNEA) <br> * Zusammenfassung; Spalte 5, Zeile 29 - Spalte 6, Zeile 17; Spalte 8, Zeilen 26-30; Figur 1 * <br> --- | 2,6,11, 25,26 | |
| A | WO-A-8 601 308 (OPTISCHE WERKE G. RODENSTOCK) <br> * Seite 5, Zeile 1 - Seite 6, Zeile 29; Figur 7 * <br> --- | 1,12,22 | |
| A | DE-A-2 916 192 (QUANTEL) <br> * Absatz 1-5 * <br> --- | 6 | **RECHERCHIERTE SACHGEBIETE (Int. Cl.5)** |
| P,Y | DE-U-8 905 130 (R. WEINZIERL) <br> * Seite 23, Zeilen 22-36; Figur 1 * <br> ----- | 1,4,8, 13,20, 21 | G 02 C 7/00 <br> G 02 B 3/00 |

Der vorliegende Recherchenbericht wurde für alle Patentansprüche erstellt

| Recherchenort | Abschlußdatum der Recherche | Prüfer |
|---|---|---|
| BERLIN | 19-06-1990 | VON MOERS F |

EPO FORM 1503 03.82 (P0403)